Europäisches Patentamt

European Patent Office

Office européen des brevets

(19)

(11) **EP 0 638 261 B1**

(12) **FASCICULE DE BREVET EUROPEEN**

(45) Date de publication et mention
de la délivrance du brevet:
**03.01.1996 Bulletin 1996/01**

(51) Int. Cl.⁶: **A45D 44/00**, G01J 3/52

(21) Numéro de dépôt: **93401994.4**

(22) Date de dépôt: **03.08.1993**

(54) **Procédé de détermination de la couleur d'un fond de teint restituant sensiblement la couleur de la peau d'une personne et appareil en comportant application**

Verfahren zur Bestimmung der Farbe einer Teintgrundierung zur sensitiven Wiederherstellung der Hautfarbe einer Person und Vorrichtung zu dessen Anwendung

Method for determining the colour of a make-up restoring sensitively the colour of the skin of a person and device for its application

(84) Etats contractants désignés:
**BE CH DE ES FR GB IT LI NL**

(43) Date de publication de la demande:
**15.02.1995 Bulletin 1995/07**

(73) Titulaire: **PARFUMS CHRISTIAN DIOR**
**F-75008 Paris (FR)**

(72) Inventeurs:
- **Gouriou, Eliane**
  **F-92130 Issy-Les-Moulineaux (FR)**
- **Raynal, Annie**
  **F-45000 Orleans (FR)**
- **Baudet, Régine**
  **F-45000 Orleans (FR)**

- **Hulaud, Jean-Pierre**
  **F-29800 La Forest Landerneau (FR)**
- **Biesse, Jean-Paul**
  **F-45130 Baccon (FR)**

(74) Mandataire: **Portal, Gérard et al**
**F-75340 Paris Cédex 07 (FR)**

(56) Documents cités:
**EP-A- 0 226 959**          **DE-A- 3 137 326**
**US-A- 1 979 119**

Remarques:
Le dossier contient des informations techniques
présentées postérieurement au dépôt de la
demande et ne figurant pas dans le présent fascicule.

## Description

La présente invention concerne essentiellement un procédé de détermination de la couleur d'un fond de teint restituant sensiblement la couleur naturelle de la peau d'une personne et un appareil en comportant application.

Dans la technique antérieure, il est connu par le document US-A-4 561 850 un dispositif en forme de disque pour coordonner des couleurs en fonction de la couleur de la peau et de la couleur des yeux d'un utilisateur afin de personnaliser le maquillage. La solution décrite dans ce document est approximative, soumise à la subjectivité de l'utilisateur et donc totalement imparfaite.

Le document FR-A-2 194 335 est un document similaire décrivant un dispositif en forme de disque répertoriant la couleur des cheveux, la couleur des yeux, le teint de la peau pour déterminer des couleurs de fond de teint de base considérées pour la personne concernée. Egalement, cette détermination est purement qualitative, soumise à la subjectivité de l'utilisateur et donc bien imparfaite.

La document DE-A-3 419 568 décrit encore une solution similaire qui cependant fait appel à un ordinateur ainsi qu'à une mémoire pour déterminer les couleurs de produits de maquillage plus personnalisées à la personne considérée. Cependant, les moyens de mise en oeuvre sont particulièrement vagues et ne peuvent donc conduire qu'à une solution particulièrement imparfaite non reproductible et peu fiable, ce qui en limite gravement son application à une échelle commerciale.

Par ailleurs, le document EP-A-0 226 959 décrit un appareillage très complexe formant simulateur de maquillage comprenant une caméra vidéo couplée à un ordinateur avec un écran d'affichage d'images couleurs ainsi que des moyens de traitement des signaux vidéo fournis par la caméra vidéo pour permettre de réaliser sur l'image couleur affichée sur un écran diverses modifications de couleurs sensées représenter l'application de maquillage de différentes couleurs jusqu'à obtention d'une simulation de maquillage acceptée par l'utilisateur.

Dans ce système, on ne peut pas s'affranchir de la présence d'un expert sur le lieu d'exploitation commercial, ce qui limite grandement la portée de ce système.

Ainsi, la présente invention a pour but de résoudre un nouveau problème technique consistant en la fourniture d'une solution permettant de déterminer la couleur d'un fond de teint restituant sensiblement la couleur naturelle de la peau d'une personne, sans intervention d'un expert sur le lieu d'exploitation commerciale.

La présente invention a encore pour but de résoudre ce nouveau problème technique selon une solution particulièrement simple, fiable, reproductible et relativement peu coûteuse.

Ces problèmes techniques sont résolus pour la première fois par la présente invention d'une manière simple, reproductible, peu coûteuse, exploitable à l'échelle commerciale en particulier dans le cadre de salons de beauté ou de coiffure, sans l'intervention d'une personne réellement qualifiée en la matière.

Ainsi, selon un premier aspect, la présente invention fournit un procédé de détermination de la couleur d'un fond de teint restituant sensiblement la couleur naturelle de la peau d'une personne, caractérisé en ce qu'il comprend les étapes suivantes :

a) dans une étape préalable, on réalise une base de données contenant une gamme de couleurs de fond de teint de référence couvrant sensiblement un échantillon représentatif d'une population d'individus donnés, cette base de données contenant au moins les données suivantes :

- la couleur de la peau à l'intérieur du bras où à l'extérieur du bras ou à la fois à l'intérieur et à l'extérieur du bras, de préférence dans une zone médiane de l'avant-bras dans laquelle la couleur des veines n'est sensiblement pas apparente, et ne contenant pas de taches cutanées,
- une référence de couleur de fond de teint associée à une ou plusieurs couleurs de peau de ladite base de données,

b) on mesure la couleur de la peau à l'intérieur du bras ou à l'extérieur du bras ou à la fois à l'intérieur et à l'extérieur du bras d'une personne concernée,

c) on compare la couleur mesurée de la peau de la personne concernée avec les couleurs de peau figurant dans la base de données, pour déterminer quelle est la couleur identique ou voisine de la base de données, et en conséquence déterminer dans ladite base de données la couleur de fond de teint associée à cette couleur de peau de ladite base de données.

Selon un mode de réalisation particulier, dans l'étape préalable, on a introduit dans ladite base de données la couleur des cheveux des individus constituant la base de manière à constituer autant de groupes d'individus que de couleurs de cheveux pris en compte ; dans ce cas, lors de la mesure de la couleur de la peau d'une personne concernée, on introduit sa couleur de cheveux de manière à déterminer dans ladite base de données tout d'abord le groupe d'individus correspondant à sa couleur de cheveux et ensuite la couleur de peau identique la plus proche figurant dans la base de données, afin d'y associer une référence de fond de teint prédéterminée par ladite base de données.

Selon un autre mode de réalisation particulier, dans l'étape préalable, on introduit dans ladite base de données la couleur des yeux des individus constituant la base de manière à constituer autant de groupes d'individus que de couleurs d'yeux pris en compte ; dans ce cas, lors de la mesure de la couleur de la peau d'une personne concernée, on introduit sa couleur d'yeux de manière a déterminer dans ladite base de données tout d'abord le groupe d'individus correspondant à sa couleur d'yeux et ensuite la couleur de peau identique ou la plus proche figurant dans la base de données, afin d'y associer une référence de fond de teint prédéterminée par ladite base de données.

Selon encore un autre mode de réalisation particulièrement préféré, dans l'étape préalable, on introduit dans ladite base de données la couleur des yeux et des cheveux des individus constituant la base de manière à constituer autant de groupes d'individus que de couleurs d'yeux et de cheveux pris en compte ; dans ce cas, lors de la mesure de la couleur de la peau d'une personne concernée, on introduit sa couleur d'yeux et de cheveux de manière à déterminer dans ladite base de données tout d'abord le groupe d'individus correspondant à sa couleur d'yeux et de cheveux et ensuite la couleur de peau identique ou la plus proche figurant dans la base de données, afin d'y associer une référence de fond de teint prédéterminée par ladite base de données.

Selon une autre caractéristique particulière du procédé de l'invention, on mesure la couleur de la peau de la manière suivante :

- on éclaire la peau, à l'intérieur du bras ou à l'extérieur du bras, ou à la fois à l'intérieur et à l'extérieur du bras, de préférence dans une zone médiane de l'avant-bras dans laquelle la couleur des veines n'est sensiblement pas apparente, et ne contenant pas de taches cutanées, dans des conditions d'éclairage déterminées, on prend une image en couleur de ladite peau de préférence dans ladite zone, et on détermine la couleur de ladite peau à partir de ladite image.

Selon une variante de réalisation particulièrement avantageuse, on détermine la couleur de la peau en déterminant les paramètres chromatiques de la couleur de la peau ; ladite base de données contient également les paramètres chromatiques des couleurs de peau des individus constituant la base, et on compare les paramètres chromatiques de la couleur de la peau de la personne concernée avec les paramètres chromatiques contenus dans ladite base, pour déterminer la couleur de fond de teint de ladite base associée à cette couleur de peau.

Selon un autre mode de réalisation avantageux de l'invention, les paramètres chromatiques de couleur de peau sont définis dans le repère R (rouge), V (vert), B (bleu) et Y (luminosité).

De préférence, la gamme de couleurs de fond de teint de référence de ladite base de données est enregistrée dans la base sous forme de codes de référence. Ladite base de données contient également des indications permettant de mettre en relation un code de référence de ladite gamme de couleur de fond de teint de référence avec une couleur de peau d'au moins un individu constituant la base.

Dans le cadre de l'invention, les couleurs de fond de teint de référence de la base de données sont définies en terme de couleur de fond de teint appliqué. Il est à noter que cette couleur de fond de teint appliqué est mesurée par application sur une zone de la peau à l'intérieur de l'avant-bras, dans laquelle la couleur des veines n'est sensiblement pas apparente, et ne contenant pas de taches cutanées, ladite personne ayant une couleur de peau voisine de la couleur de fond de teint à appliquer. Dans le cadre de l'invention, que ce soit dans la description ou les revendications, la couleur de fond de teint est toujours la couleur de fond de teint appliqué car on peut obtenir la même couleur de fond de teint appliqué à partir d'une variété de couleurs de masse dues à des formulations différentes des fonds de teint, par exemple émulsions, crèmes, gras, poudres.

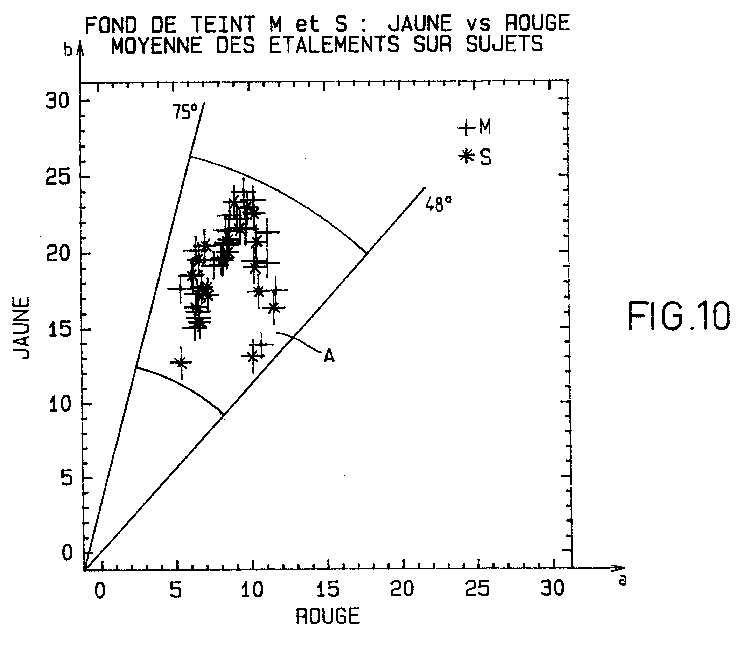

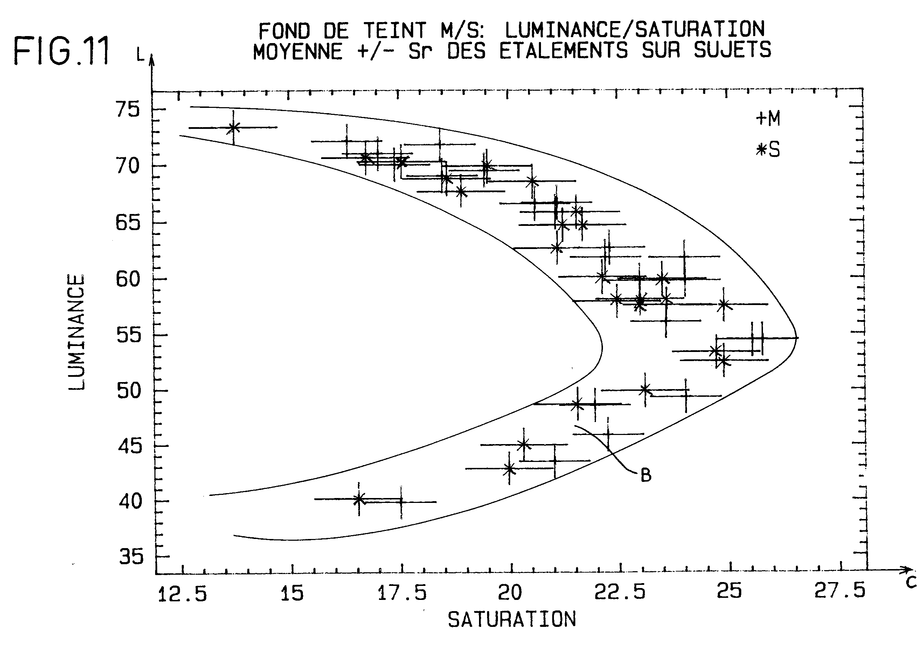

Egalement, selon un mode de réalisation préféré de l'invention, les coordonnées en système de coordonnées Lab, des couleurs des fonds de teint de référence de la base de données constituant ladite gamme, sont comprises respectivement dans la zone A de la figure 10, dans le plan de coordonnées a (rouge), b (jaune) de la figure 10, comprise d'une part entre les deux demi-droites d'origine 0 et formant respectivement avec l'axe du rouge des angles d'environ 48° et environ 75°, et d'autre part les deux arcs de cercle de centre 0, de rayon correspondant respectivement aux valeurs de saturation 13 et 27, et compris entre lesdites deux demi-droites, et dans la zone B dans un plan de coordonnées L (luminance), C (saturation) de la figure 11, ce plan résultant de la superposition de l'ensemble des plans de coordonnées L, C résultant de l'ensemble des couleurs de fond de teint de référence de ladite base de données de ladite gamme. Il est à noter que la coordonnée C (saturation) se déduit mathématiquement des coordonnées a et b par la formule mathématique

$$C = \sqrt{a^2 + b^2}.$$

En outre, dans le cadre de l'invention, les coordonnées Lab sont déterminées par une méthode colorimétrique bien connue à l'homme de l'art. Il est à noter que les coordonnées obtenues par cette méthode colorimétrique varient légèrement en fonction du type de colorimètre utilisé, mais qu'elles restent essentiellement les mêmes.

Selon un deuxième aspect, la présente invention fournit également un appareil de détermination de la couleur d'un fond de teint restituant sensiblement la couleur naturelle de la peau d'une personne, caractérisé en ce qu'il comprend :

a) des moyens de mesure de la couleur de la peau à l'intérieur du bras ou à l'extérieur du bras ou à la fois à l'intérieur et à l'extérieur du bras, de préférence dans une zone médiane de l'avant-bras dans laquelle la couleur des veines n'est sensiblement pas apparente, et ne contenant pas de taches cutanées,
b) des moyens de calcul et de détermination de la couleur de la peau mesurée par les moyens de mesure, ces moyens de détermination comprenant une base de données contenant une gamme de couleurs de fond de teint de référence couvrant sensiblement un échantillon représentatif d'une population d'individus donnés, cette base de données contenant au moins les données suivantes :

- la couleur de la peau à l'intérieur du bras ou à l'extérieur du bras ou à la fois à l'intérieur et à l'extérieur du bras, de préférence dans une zone médiane de l'avant-bras dans laquelle la couleur des veines n'est sensiblement pas apparente, et ne contenant pas de taches cutanées,
- une référence de couleur de fond de teint associée à une ou plusieurs couleurs de peau de ladite base de données,

c) lesdits moyens de détermination comprenant des moyens de comparaison de la couleur mesurée de la peau de la personne concernée avec les couleurs de peau figurant dans la base de données, pour déterminer quelle est la couleur identique ou voisine de la base de données et en conséquence déterminer dans ladite base de données la couleur de fond de teint associée à cette couleur de peau et, avantageusement, des moyens d'affichage de la couleur de fond de teint déterminée.

Selon une variante de réalisation particulière, cet appareil comprend également dans ladite base de données la couleur des cheveux des individus constituant la base de manière à constituer autant de groupes d'individus que de couleurs de cheveux pris en compte, ainsi que des moyens d'introduction de la couleur des cheveux d'une personne concernée dont on mesure la couleur de la peau pour déterminer dans ladite base de données tout d'abord le groupe d'individus correspondant à sa couleur de cheveux et ensuite la couleur de peau identique ou la plus proche figurant dans la base de données, afin d'y associer une référence de fond de teint prédéterminée par ladite base de données qui est ensuite affichée par les moyens d'affichage.

Selon une autre caractéristique avantageuse de l'appareil selon l'invention, la base de données précitée contient la couleur des yeux des individus constituant la base de manière à constituer autant de groupes d'individus que de couleurs d'yeux pris en compte, ainsi que des moyens d'introduction de la couleur d'yeux d'une personne concernée dont on mesure la couleur de la peau, de manière à déterminer dans ladite base de données tout d'abord le groupe d'individus correspondant à sa couleur d'yeux et ensuite la couleur de peau identique ou la plus proche figurant dans la base de données, afin d'y associer une référence de fond de teint prédéterminée par ladite base de données.

Selon encore une autre caractéristique particulièrement préférée de l'invention, la base de données précitée contient la couleur des yeux et des cheveux des individus constituant la base de manière à constituer autant de groupes d'individus que de couleurs d'yeux et de cheveux pris en compte ; et des moyens d'introduction de la couleur des yeux et des cheveux d'une personne concernée dont on mesure la couleur de la peau, de manière à déterminer dans ladite base de données tout d'abord le groupe d'individus correspondant à sa couleur d'yeux et de cheveux et ensuite la couleur de peau identique ou la plus proche figurant dans la base de données, afin d'y associer une référence de fond de teint prédéterminée par ladite base de données qui est affichée par les moyens d'affichage.

Selon un mode de réalisation particulier, les moyens de mesure de la couleur de la peau précités comprennent :

- un dispositif d'éclairage de la peau dans des conditions d'éclairage déterminées,
- des moyens de prise d'image couleur de la peau, de préférence comprenant une caméra vidéo couleur ayant avantageusement de très bonnes performances chromatiques,
- des moyens de réception et de traitement d'image pour déterminer ladite couleur de peau.

Selon un mode de réalisation particulier, les moyens de réception et de traitement déterminent les paramètres chromatiques de la couleur de peau. Dans ce cas, la base de données contient également les paramètres chromatiques des couleurs de peau des individus constituant la base.

Selon un mode de réalisation avantageux, les moyens de réception et de traitement d'image comprennent des moyens de calcul, par exemple micro-ordinateur(s) ou ordinateur(s) et les moyens d'affichage précités comprennent un écran et/ou une imprimante.

Selon un autre mode de réalisation avantageux de l'invention, les moyens de mesure précités comprennent une caméra vidéo montée déplaçable sur le châssis de l'appareil, au moins en translation selon une direction verticale et avantageusement également montée pivotante selon un axe de rotation sensiblement orthogonal à l'axe de translation vertical. Selon un mode de réalisation avantageux, le déplacement en translation verticale est réalisé par un coulissement de la caméra vidéo sur un rail monté sensiblement vertical sur le châssis de l'appareil.

Selon un autre mode de réalisation particulier, avantageux de l'invention, l'appareil précité de l'invention comprend au moins une tablette comprenant des moyens de réception de l'avant-bras d'une personne concernée, ladite tablette étant positionnée à une hauteur éventuellement réglable, pour permettre la mesure de la couleur de la peau d'une personne concernée sur son avant-bras dans des conditions de mesure optimales et néanmoins confortables pour la personne concernée.

Avantageusement cet appareil comprend également un boîtier, par exemple de forme sensiblement parallélépipédique, comprend sur sa face supérieure au moins un orifice pour le passage de l'écran des moyens d'affichage d'image, et un clavier de commande pour la commande et/ou l'introduction de données dans une unité centrale comprenant ou constituant des moyens de réception et de traitement d'image, comprenant des moyens de calcul et de détermination, par exemple un micro-ordinateur ou ordinateur, et des moyens d'impression tels qu'une imprimante.

Selon un troisième aspect, la présente invention couvre également une gamme de couleurs de fond de teint de référence, caractérisée en ce qu'elle est définie respectivement par la zone A de la figure 10, dans le plan de coordonnées a (rouge), b (jaune) de la figure 10, comprise d'une part entre les deux demi-droites d'origine 0 et formant respectivement avec l'axe du rouge des angles d'environ 48° et environ 75°, et d'autre part les deux arcs de cercle de centre 0, de rayon correspondant respectivement aux valeurs de saturation 13 et 27, et compris entre lesdites deux demi-droites, et dans la zone B dans un plan de coordonnées L (luminance), C (saturation) de la figure 11, ce plan résultant de la superposition de l'ensemble des plans de coordonnées L, C résultant de l'ensemble des couleurs de fond de teint de référence de ladite base de données de ladite gamme.

Selon un mode de réalisation avantageux, cette gamme de couleurs de fond de teint de référence comprend au moins 20 teintes de fond de teint dont les coordonnées colorimétriques sont respectivement situées dans les zones A et B précitées des figures 10 et 11.

On comprend que, grâce à l'invention, on résout les problèmes techniques précédemment énoncés, de manière simple, reproductible, peu coûteuse et permettant de s'affranchir de la présence d'un expert sur le lieu de l'exploitation commerciale, contrairement aux solutions antérieures qui exigeaient toutes d'une façon ou d'une autre la présence d'un expert sur le terrain.

D'autres buts, caractéristiques et avantages de l'invention apparaîtront clairement à la lumière de la description explicative qui va suivre faite en référence aux dessins annexés représentant divers modes de réalisation de l'invention donnés simplement à titre d'illustration et qui ne sauraient donc en aucune façon limiter la portée de l'invention. Dans les dessins :

- la figure 1 représente schématique et en élévation un appareil de détermination de la couleur d'un fond de teint restituant sensiblement la couleur naturelle de la peau d'une personne ;
- la figure 2 représente dans le plan de coordonnées a (rouge), b (jaune) dans le système de coordonnées Lab la gamme de couleurs de fond de teint de référence, avec ses codes de référence, utilisée pour constituer la base de données utilisées dans le cadre de l'appareil représenté à la figure 1, ainsi que pour la mise en oeuvre du procédé selon la présente invention ;
- la figure 3 est une vue similaire à la figure 2 mais représentant les écarts types obtenus pour chaque fond de teint de référence de la gamme ;

- la figure 4 représente dans un plan de coordonnées L (luminance), C (saturation), les coordonnées colorimétriques dans le système Lab de l'ensemble des couleurs de fond de teint de référence de la gamme, défini par ses codes de référence, et utilisé pour constituer la base de données précitée utilisée dans le cadre de l'appareil de l'invention de la figure 1, ainsi que pour la mise en oeuvre du procédé de l'invention ;
- la figure 5 est une vue similaire à la figure 4 avec représentation des écarts types pour chacun des fonds de teint de la gamme ;
- la figure 6 est une figure similaire à la figure 2 mais représentant les coordonnées colorimétriques en système Lab de la couleur de peau obtenue pour chaque individu de l'échantillon représentatif d'une population d'individus concernés prise en compte dans la base de données, utilisée dans le cadre de l'appareil de la figure 1, ou pour la mise en oeuvre du procédé selon l'invention ;
- la figure 7 est une figure similaire à la figure 6, mais représentant l'écart type pour chacune des coordonnées de chacun individu ;
- la figure 8 représente une vue similaire à la figure 4 dans le même plan L, C des coordonnées colorimétriques de couleur de peau de chaque individu de l'échantillon représentatif précité de la base de données ;
- la figure 9 est une vue similaire à la figure 8 mais représentant l'écart type des coordonnées colorimétriques ;
- la figure 10 est une figure similaire à la figure 3 superposant deux variantes de gamme de couleurs de fond de teint de référence selon la présente invention avec leur écart type, une première variante étant identique à la variante de gamme représentée aux figures 2 à 9 et ayant ici une brillance mate (M), et une deuxième variante ayant une brillance supérieure qualifiée de satinée (S) par exemple par la présence d'une plus grande concentration en nacres ; et
- la figure 11 représente une figure similaire à la figure 5, pour la même superposition des deux variantes de la figure 10.

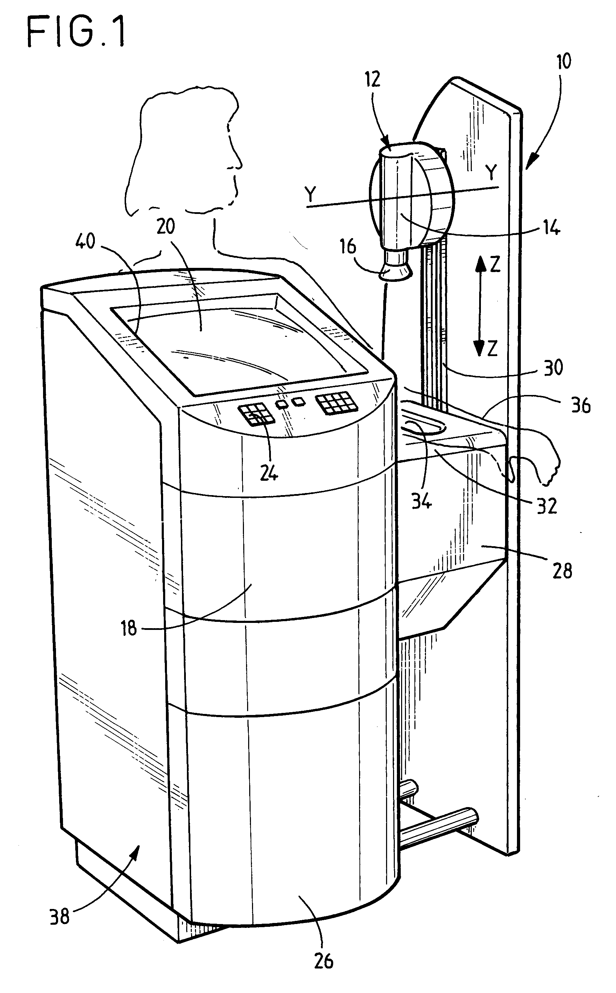

En référence à la figure 1, l'appareil selon l'invention est représenté par le numéro de référence général 10.

Cet appareil comprend des moyens 12 de mesure de couleur de peau comprenant par exemple une caméra vidéo 14, des moyens d'éclairage 16 de la peau d'une personne concernée dans des conditions d'éclairage déterminées. La caméra vidéo 14 constitue des moyens de prises d'images couleurs. Cet appareil comprend aussi des moyens de réception et de traitement d'image 18, comprenant des moyens de calcul et de détermination, par exemple comprend un ordinateur ou micro-ordinateur relié à la caméra vidéo (14) de manière classique via une carte vidéo pour permettre un stockage de l'image obtenue au moyen de la caméra vidéo. L'ordinateur ou micro-ordinateur peut être avantageusement équipé d'un micro-processeur de type 80/386 ou de préférence 80/486 avec un disque dur de 40 méga-octets. Les moyens de calcul peuvent être reliés à des moyens d'affichage 20, par exemple comprenant un écran vidéo par exemple un écran couleur de type V.G.A, et/ou une imprimante 26.

Les moyens d'éclairage 16 précités peuvent par exemple comprendre un éclairage à fibres optiques placé à proximité de l'objectif de la caméra et dirigé vers la zone de la peau à analyser en centrant la lumière au centre de cette zone. Cette zone est avantageusement une zone à l'intérieur du bras ou à l'extérieur du bras, de préférence dans une zone médiane de l'avant-bras dans laquelle la couleur des veines n'est sensiblement pas apparente, et ne contenant pas de taches cutanées.

L'unité centrale 18 comprend également dans sa mémoire, sous forme passive ou de préférence sous forme active, une base de données contenant une gamme de couleurs de fond de teint de référence couvrant sensiblement un échantillon représentatif d'une population d'individus concernés, cette base de données contenant au moins les données suivantes :

- la couleur de la peau à l'intérieur du bras ou à l'extérieur du bras ou à la fois à l'intérieur et à l'extérieur du bras, de préférence dans une zone médiane de l'avant-bras dans laquelle la couleur des veines n'est sensiblement pas apparente, et ne contenant pas de taches cutanées,
- une référence de couleur de fond de teint associée à une ou plusieurs couleurs de peau de ladite base de données,

Dans une variante de réalisation, cette base de données contient également la couleur des yeux des individus constituant la base de manière à constituer autant de groupes d'individus que de couleurs d'yeux prises en compte. Dans ce cas, l'appareil comprend également des moyens 24 d'introduction de données, tels qu'un clavier, pour permettre au moins l'introduction de la couleur des yeux.

Selon une autre variante, la base de données précitée contient aussi la couleur des cheveux des individus constituant la base et les moyens 24 d'introduction de données permettent également d'introduire la couleur des cheveux.

Selon encore une autre variante particulièrement préférée, la base de données contient à la fois la couleur des yeux et des cheveux des individus constituant la base et les moyens d'introduction précités 24 permettent d'introduire à la fois la couleur des yeux et des cheveux de la personne concernée.

Le procédé de détermination de la couleur d'un fond de teint restituant sensiblement la couleur naturelle de la peau d'une personne ressort clairement de la définition du procédé énoncé dans la partie introductive de la présente description, ainsi que de la description précédente de l'appareil. En fonctionnement, on procédera de la manière suivante :

a) tout d'abord, on comprend que dans une étape préalable on a réalisé une base de données contenant une gamme de couleurs de fonds de teint de référence couvrant sensiblement un échantillon représentatif d'une population d'individus concernés, cette base de données contenant au moins les données précédemment énoncées relativement au procédé, à savoir la couleur de la peau des individus constituant la base, une référence de couleur de fond de teint associée à une ou plusieurs couleurs de peau de la base de données,

b) on éclaire la peau de l'avant-bras d'une personne concernée, à l'intérieur puis de préférence aussi à l'extérieur de l'avant-bras, dans une zone dans laquelle la couleur des veines n'est sensiblement pas apparente, et ne contenant pas de taches cutanées, on réalise une prise d'image(s) couleur(s) à l'aide des moyens de prises d'images couleurs 12 comprenant ici une caméra vidéo 14, cette image couleur étant transmise aux moyens de réception et de traitement 18 via une carte vidéo, pour déterminer les paramètres chromatiques de ladite image couleur, en particulier en coordonnées R (rouge), V (vert), B (bleu) et Y (luminosité), bien connues à l'homme de l'art.

Ces paramètres chromatiques sont ensuite comparés avec les paramètres chromatiques de la base de données, obtenus de la même manière avec ledit appareillage, pour déterminer quelle est la couleur identique ou voisine de la base de données et en conséquence déterminer la référence de couleur de fond de teint associée à cette couleur.

Dans les variantes de réalisation avantageuses, on peut également introduire la couleur des yeux et/ou des cheveux de la personne concernée de manière à déterminer dans lesdites bases de données tout d'abord le groupe d'individus correspondant à cette couleur d'yeux et/ou de cheveux avant de déterminer la couleur de peau identique ou la plus proche figurant dans la base de données ainsi que la référence de fond de teint associée prédéterminée par la base de données.

Selon un mode de réalisation avantageux de l'invention, les moyens de mesure précités 12 comprennent une caméra vidéo 14 montée déplaçable sur le châssis 28 de l'appareil, au moins en translation selon une direction verticale Z-Z et avantageusement également montée pivotante selon un axe de rotation Y-Y sensiblement orthogonal à l'axe de translation verticale Z-Z. Selon un autre mode de réalisation avantageux, le déplacement en translation verticale selon l'axe Z-Z est réalisé par un coulissement de la caméra vidéo 14 sur un rail 30 monté sensiblement vertical sur le châssis 28 de l'appareil.

Avantageusement, l'appareil 10 peut également comprendre au moins une tablette 32 comprenant des moyens de réception 34 de l'avant-bras 36 d'une personne concernée, ladite tablette 32 étant positionnée à une hauteur éventuellement réglable, pour permettre la mesure de la couleur de la peau d'une personne concernée sur son avant-bras dans des conditions de mesure optimales et néanmoins confortables pour la personne concernée.

Cet appareil peut également comprendre un boîtier 38, par exemple de forme sensiblement paralélépipédique, comprenant sur sa face supérieure au moins un orifice 40 pour le passage de l'écran des moyens d'affichage 20 d'image, et un clavier de commande 24 pour la commande et/ou l'introduction de données dans une unité centrale 18 comprenant ou constituant les moyens de réception et de traitement d'image précités, qui comprennent eux-mêmes des moyens de calcul et de détermination, par exemple un micro-ordinateur ou ordinateur, et des moyens d'impression 26 tels qu'une imprimante.

Dans le cadre de l'invention, la base de données est constituée de la manière suivante :

-  on sélectionne tout d'abord un échantillon représentatif d'une population d'individus donnés ;
-  pour chacun des individus de cet échantillon représentatif, on constitue une base de données contenant les informations suivantes :

   a) la couleur de la peau à l'intérieur du bras et ici également l'extérieur du bras, dans une zone médiane de l'avant bras dans laquelle la couleur des veines est sensiblement pas apparente, et ne contenant pas de taches cutanées. Cette mesure de couleur est effectuée avec l'appareil de l'invention précédemment décrit et les mesures de couleur obtenues, en particulier avec les paramètres chromatiques, de préférence dans le repère R (rouge) ; V (vert) ; B (bleu) ; et Y (luminosité), sont enregistrées dans la base de données ;

-  par ailleurs, une gamme de fond de teint de référence a été préparée dans une étape antérieure par un expert, cette gamme de fond de teint de référence comprenant au moins un fond de teint de référence pour au moins un individu de l'échantillon représentatif précité et inversement. Par simplification, on attribue un code de référence pour chaque fond de teint, ce code de référence étant introduit dans la base de données ;
-  la base de données contient également des indications relatives à la couleur naturelle des cheveux, de préférence limitées aux couleurs principales. Dans le cas d'une population de type caucasien, on n'utilise avantageusement que six couleurs principales, à savoir blond clair, blond, roux, chatain, chatain foncé, noir, auxquelles la base de données permet de répondre positivement à une seule de ces couleurs ;

-  de manière similaire, la base de données contient également des indications concernant la couleur des yeux de chaque individu de l'échantillon représentatif précité. De préférence, on limite également le nombre de couleurs principales d'yeux. Dans le cas précité d'une population de type caucasien, on se limitera avantageusement à cinq couleurs principales, à savoir bleu clair, bleu, vert, noisette, brun, la base de données permettant de répondre positivement à une seule de ces couleurs.

Il est considéré que cette gamme de fond de teint de référence est nouvelle par rapport aux gammes de fond de teint antérieurement connues et notamment les gammes de fond de teint commercialement disponibles. Cette gamme de fond de teint est donc considérée comme étant brevetable indépendamment de l'appareil et du procédé précités.

Cette gamme de fond de teint de référence est caractérisée respectivement par la zone A de la figure 10, dans le plan de coordonnées a (rouge), b (jaune) de la figure 10 et dans la zone B dans un plan de coordonnées L (luminance), C (saturation) de la figure 11, ce plan résultant de la superposition de l'ensemble des plans de coordonnées L, C résultant de l'ensemble des couleurs de fond de teint de référence de ladite base de données de ladite gamme. Selon un mode de réalisation avantageux, cette gamme de couleurs de fond de teint de référence comprend au moins 20 teintes de fond de teint dont les coordonnées colorimétriques sont respectivement situées dans les zones A et B des figures 10 et 11. La zone A peut être définie de façon précise comme étant la zone comprise d'une part entre les deux demi-droites d'origine 0 et formant respectivement avec l'axe du rouge des angles d'environ 48° et environ 75°, et d'autre part, les deux arcs de cercles de centre 0, de rayon correspondant respectivement aux valeurs de saturation 13 et 27, et compris entre lesdites deux demi-droites, comme clairement visible à la figure 10.

Pour déterminer les coordonnées colorimétriques de chacune des couleurs des fonds de teint de la gamme, on a utilisé une méthode colorimétrique de mesure des couleurs de peau bien connue à l'homme de l'art qui est, par exemple, décrite dans l'ouvrage de Mr Alain Trouvé publié par l'AFNOR ayant pour titre "la mesure de la couleur" (1991) ou à la bibliographie qu'il contient et notamment les normes AFNOR, ASTM et DIN pages 188 à 190, en particulier les normes AFNOR X08-001, X08-010 ; ASTM E 308 ; DIN 5033 partie 6.

On comprend ainsi que la détermination de la couleur de fond de teint associée restituant sensiblement la couleur naturelle de la peau d'une personne est réalisée d'une manière essentiellement automatique sans nécessiter l'intervention d'un expert, ce qui garantit sa reproductibilité et fiabilité. On comprend également que la réalisation d'un tel appareil est relativement peu coûteuse, compte tenu notamment du fait que l'on s'affranchit de la présence d'un expert sur le lieu d'exploitation commerciale.

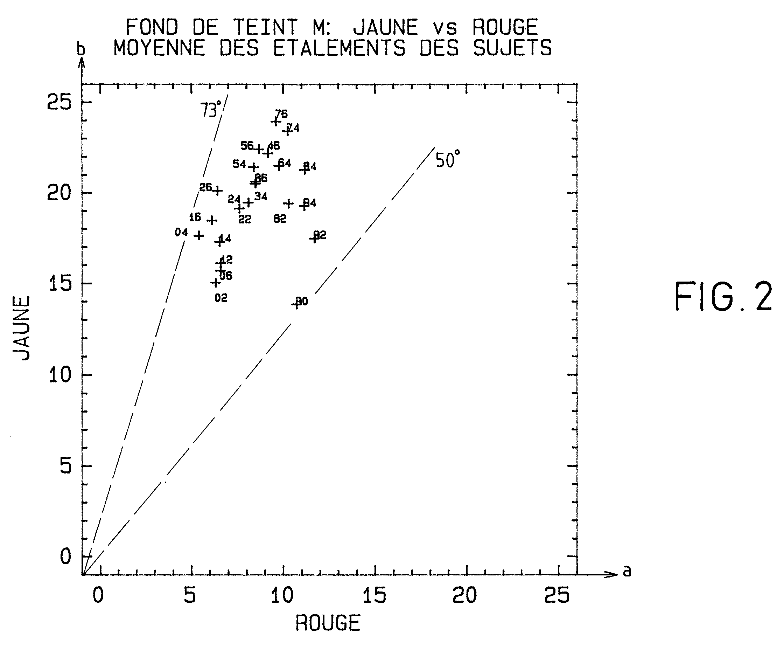

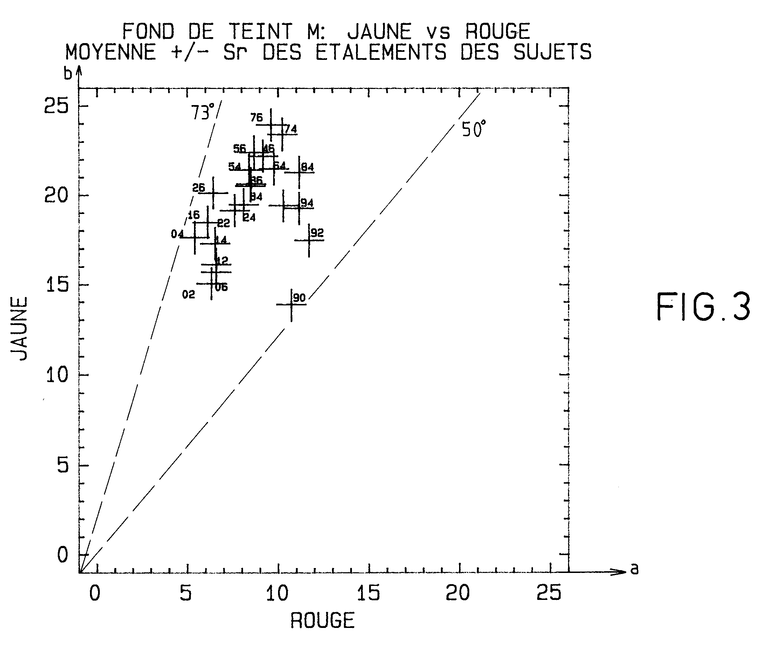

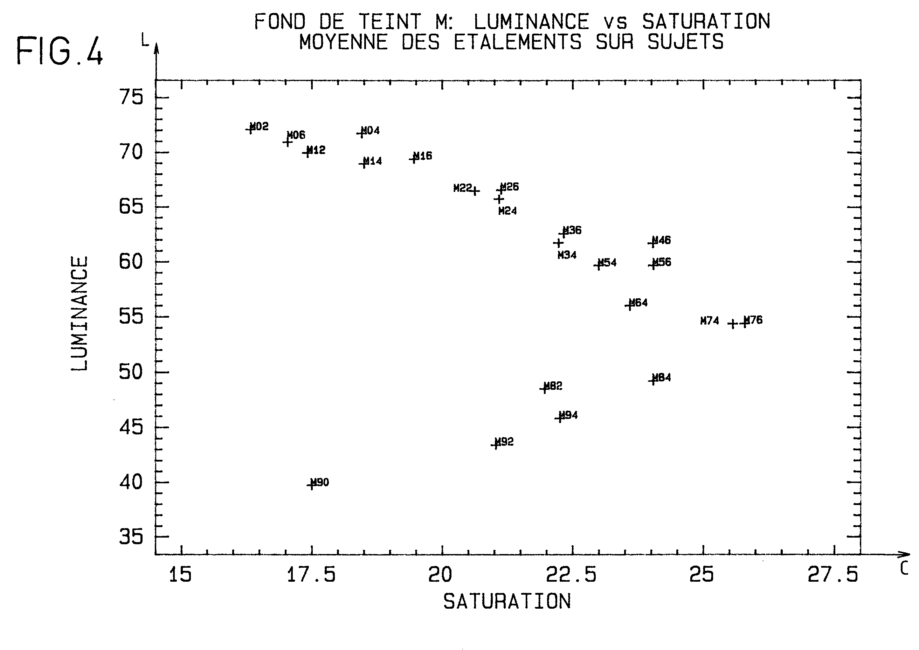

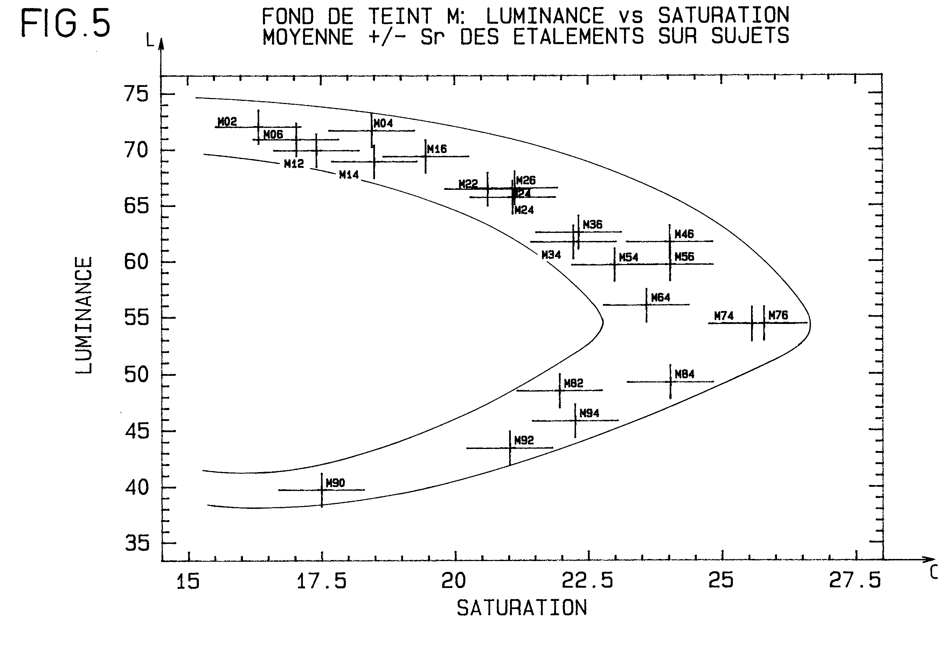

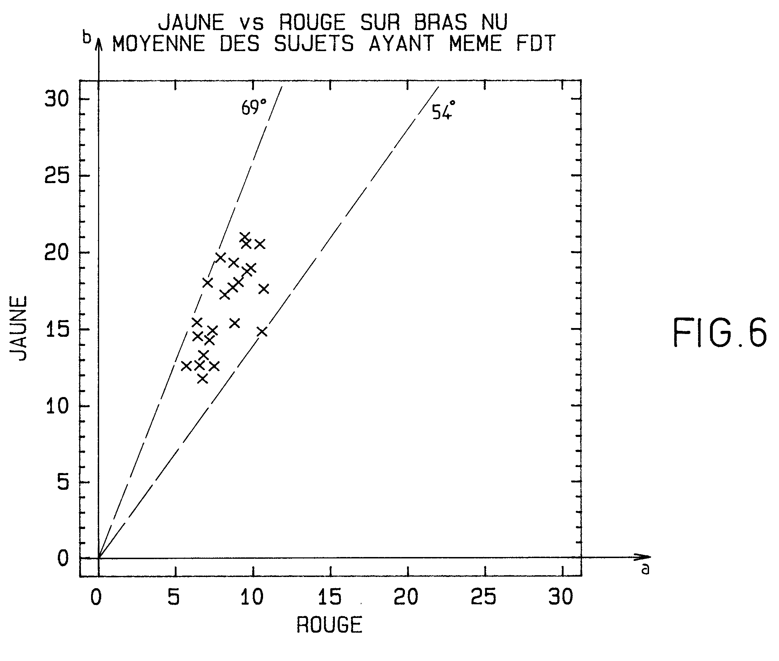

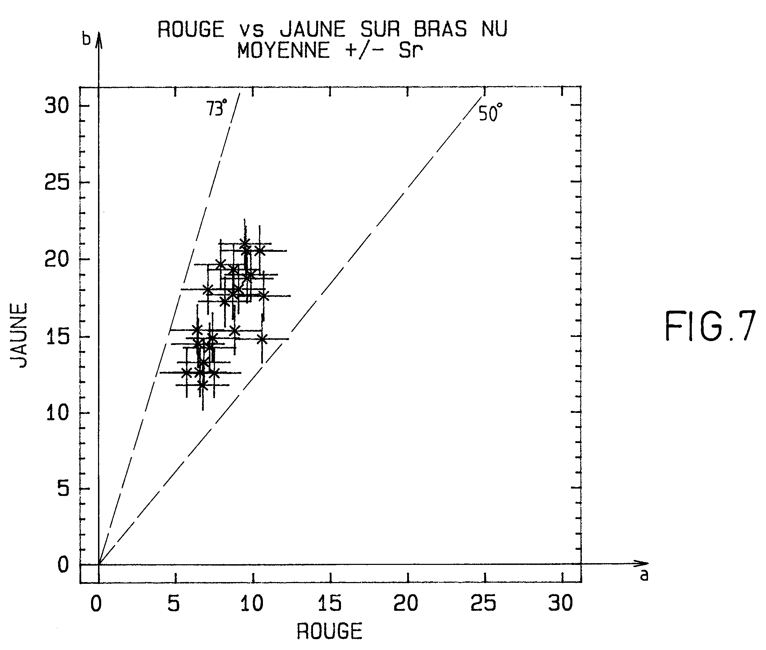

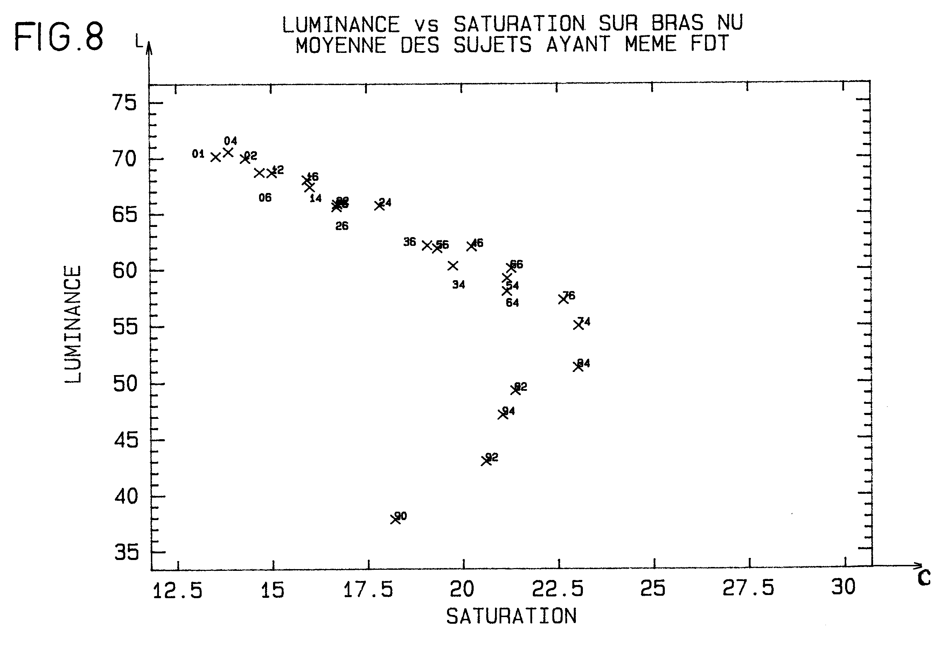

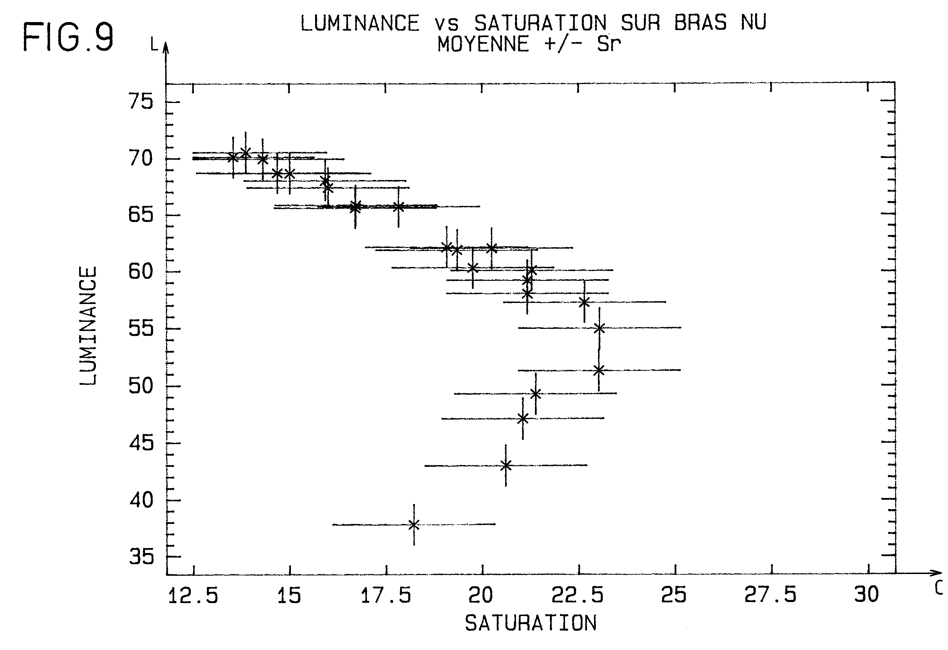

D'autres avantages liés à la présente invention apparaîtront également à un homme de l'art. Ainsi, l'invention n'est nullement limitée aux modes de réalisation décrits et représentés et comprend tous les moyens constituant des équivalents techniques des moyens décrits et représentés. Par ailleurs, les modes de réalisation respectivement de l'appareil de la figure 1 et de la gamme de fond de teint définie par les figures 2 à 11, font partie intégrante de la présente invention et donc de la description.

## Revendications

1. Procédé de détermination de la couleur d'un fond de teint restituant sensiblement la couleur naturelle de la peau d'une personne, caractérisé en ce qu'il comprend les étapes suivantes :

    a) dans une étape préalable, on réalise une base de données contenant une gamme de couleurs de fond de teint de référence couvrant sensiblement un échantillon représentatif d'une population d'individus donnés, cette base de données contenant au moins les données suivantes :

    - la couleur de la peau à l'intérieur du bras ou à l'extérieur du bras ou à la fois à l'intérieur et à l'extérieur du bras, de préférence dans une zone médiane de l'avant-bras dans laquelle la couleur des veines n'est sensiblement pas apparente, et ne contenant pas de taches cutanées,
    - une référence de couleur de fond de teint associée à une ou plusieurs couleurs de peau de ladite base de données,

    b) on mesure la couleur de la peau à l'intérieur du bras ou à l'extérieur du bras ou à la fois à l'intérieur et à l'extérieur du bras d'une personne concernée,
    c) on compare la couleur mesurée de la peau de la personne concernée avec les couleurs de peau figurant dans la base de données, pour déterminer quelle est la couleur identique ou voisine de la base de données, et en conséquence déterminer dans ladite base de données la couleur de fond de teint associée à cette couleur de peau de ladite base de données.

2. Procédé selon la revendication 1, caractérisé en ce que dans l'étape préalable, on introduit dans ladite base de données la couleur des cheveux des individus constituant la base de manière à constituer autant de groupes d'individus que de couleurs de cheveux pris en compte ; dans ce cas, lors de la mesure de la couleur de la peau d'une personne concernée, on introduit sa couleur de cheveux de manière à déterminer dans ladite base de données tout d'abord le groupe d'individus correspondant à sa couleur de cheveux et ensuite la couleur de peau identique ou la plus proche figurant dans la base de données, afin d'y associer une référence de fond de teint prédéterminée par ladite base de données.

3. Procédé selon la revendication 1, caractérisé en ce que dans l'étape préalable, on introduit dans ladite base de données la couleur des yeux des individus constituant la base de manière à constituer autant de groupes d'individus que de couleurs d'yeux pris en compte ; dans ce cas, lors de la mesure de la couleur de la peau d'une personne concernée, on introduit sa couleur d'yeux de manière à déterminer dans ladite base de données tout d'abord le groupe d'individus correspondant à sa couleur d'yeux et ensuite la couleur de peau identique ou la plus proche figurant dans la base de données, afin d'y associer une référence de fond de teint prédéterminée par ladite base de données.

4. Procédé selon la revendication 1, caractérisé en ce que dans l'étape préalable, on introduit dans ladite base de données la couleur des yeux et des cheveux des individus constituant la base de manière à constituer autant de groupes d'individus que de couleurs d'yeux et de cheveux pris en compte ; dans ce cas, lors de la mesure de la couleur de la peau d'une personne concernée, on introduit sa couleur de yeux et de cheveux de manière à déterminer dans ladite base de données tout d'abord le groupe d'individus correspondant à sa couleur d'yeux et de cheveux et ensuite la couleur de peau identique ou la plus proche figurant dans la base de données, afin d'y associer une référence de fond de teint prédéterminée par ladite base de données.

5. Procédé selon l'une des revendications précédentes, caractérisé en ce qu'on mesure la couleur de la peau de la manière suivante :

    - on éclaire la peau d'une personne concernée dans des conditions d'éclairage déterminées,
    - on prend une image en couleur de la peau avec un dispositif de prise d'image couleur,
    - on détermine la couleur de la peau à l'aide de ladite image couleur.

6. Procédé selon la revendication 5, caractérisé en ce que pour déterminer la couleur de la peau précitée, on détermine les paramètres chromatiques de la couleur de la peau.

7. Procédé selon l'une des revendications précédentes, caractérisé en ce que la gamme de couleur de fond de teint de référence de ladite base de données est définie respectivement par la zone A de la figure 10, dans le plan de coordonnées a (rouge), b (jaune) de la figure 10, comprise d'une part entre les deux demi-droites d'origine 0 et formant respectivement avec l'axe du rouge des angles d'environ 48° et environ 75°, et d'autre part les deux arcs de cercle de centre 0, de rayon correspondant respectivement aux valeurs de saturation 13 et 27, et compris entre lesdites deux demi-droites, et dans la zone B dans un plan de coordonnées L (luminence), C (saturation) de la figure 11, ce plan résultant de la superposition de l'ensemble des plans de coordonnées L, C résultant de l'ensemble des couleurs de fond de teint de référence de ladite base de données de ladite gamme, la couleur étant définie en terme de couleur de fond de teint appliqué, cette couleur de fond de teint appliqué étant mesurée par application sur une zone de la peau à l'intérieur de l'avant-bras d'une personne ayant une couleur de peau voisine de la couleur de fond de teint à appliquer.

8. Appareil de détermination de la couleur d'un fond de teint restituant sensiblement la couleur naturelle de la peau d'une personne, caractérisé en ce qu'il comprend:

a) des moyens (12) de mesure de la couleur de la peau à l'intérieur du bras ou à l'extérieur du bras ou à la fois à l'intérieur et à l'extérieur du bras, de préférence dans une zone médiane de l'avant-bras dans laquelle la couleur des veines n'est sensiblement par apparente, et ne contenant pas de taches cutanées,

b) des moyens (18) de calcul et de détermination de la couleur de la peau mesurée par les moyens de mesure (12), ces moyens de détermination (18) comprenant une base de données contenant une gamme de couleurs de fond de teint de référence couvrant sensiblement un échantillon représentatif d'une population d'individus donnés, cette base de données contenant au moins les données suivantes :

- la couleur de la peau à l'intérieur du bras ou à l'extérieur du bras ou à la fois à l'intérieur et à l'extérieur du bras, de préférence dans une zone médiane de l'avant-bras dans laquelle la couleur des veines n'est sensiblement pas apparente, et ne contenant pas de taches cutanées,
- une référence de couleur de fond de teint associée à une ou plusieurs couleurs de peau de ladite base de données,

c) lesdits moyens de détermination (18) comprenant des moyens de comparaison de la couleur mesurée de la peau de la personne concernée avec les couleurs de peau figurant dans la base de données, pour déterminer quelle est la couleur identique ou voisine de la base de données et en conséquence déterminer dans ladite base de données la couleur de fond de teint associée à cette couleur de peau et, avantageusement, des moyens d'affichage (20) de la couleur de fond de teint déterminée.

9. Appareil selon la revendication 8, caractérisé en ce qu'il comprend également dans ladite base de données la couleur des cheveux des individus constituant la base de manière à constituer autant de groupes d'individus que de couleurs de cheveux pris en compte, ainsi que des moyens d'introduction de la couleur des cheveux d'une personne concernée dont on mesure la couleur de la peau pour déterminer dans ladite base de données tout d'abord le groupe d'individus correspondant à sa couleur de cheveux et ensuite la couleur de peau identique ou la plus proche figurant dans la base de données, afin d'y associer une référence de fond de teint prédéterminée par ladite base de données qui est ensuite affichée par les moyens d'affichage.

10. Appareil selon la revendication 8 ou 9, caractérisé en ce que la base de données précitée contient la couleur des yeux des individus constituant la base de manière à constituer autant de groupes d'individus que de couleurs d'yeux pris en compte, ainsi que des moyens d'introduction de la couleur d'yeux d'une personne concernée dont on mesure la couleur de la peau, de manière à déterminer dans ladite base de données tout d'abord le groupe d'individus correspondant à sa couleur d'yeux et ensuite la couleur de peau identique ou la plus proche figurant dans la base de données, afin d'y associer une référence de fond de teint prédéterminée par ladite base de données.

11. Appareil selon l'une des revendications 8 à 10, caractérisé en ce que la base de données précitée contient la couleur des yeux et des cheveux des individus constituant la base de manière à constituer autant de groupes d'individus que de couleurs d'yeux et de cheveux pris en compte ; et des moyens d'introduction de la couleur des yeux et des cheveux d'une personne concernée dont on mesure la couleur de la peau, de manière à déterminer dans ladite base de données tout d'abord le groupe d'individus correspondant à sa couleur d'yeux et de cheveux et ensuite la couleur de peau identique ou la plus proche figurant dans la base de données, afin d'y associer une référence de fond de teint prédéterminée par ladite base de données qui est affichée par les moyens d'affichage.

12. Appareil selon l'une des revendications 8 à 11, caractérisé en ce que les moyens de mesure (12) de la couleur de la peau précités comprennent :

- un dispositif d'éclairage (16) de la peau dans des conditions d'éclairage déterminées,
- des moyens de prise d'image couleur (14) de la peau, de préférence comprenant une caméra vidéo couleur ayant avantageusement de très bonnes performances chromatiques,
- des moyens de réception et de traitement d'image (18) pour déterminer ladite couleur de peau.

13. Appareil selon l'une des revendications 8 à 12, caractérisé en ce que les moyens de réception et de traitement (18) précités déterminent les paramètres chromatiques de la couleur de peau ; dans ce cas, la base de données précitée contient également les paramètres chromatiques des couleurs de peau des individus constituant la base, de préférence en coordonnées R (rouge), V (vert), B (bleu) et Y (luminosité).

14. Appareil selon la revendication 12 ou 13, caractérisé en ce que les moyens de réception et de traitement d'image (18) précités comprennent des moyens de calcul, par exemple micro-ordinateurs ou ordinateurs et les moyens d'affichage (20) précités comprennent un écran et/ou une imprimante (26).

15. Appareil selon l'une des revendications 8 à 14, caractérisé en ce que les moyens de mesure précités (12) comprennent une caméra vidéo (14) montée déplaçable sur le châssis (28) de l'appareil (10), au moins en translation selon une direction verticale Z-Z et avantageusement également montée pivotante selon un axe de rotation Y-Y sensiblement orthogonal à l'axe de translation vertical Z-Z.

16. Appareil selon la revendication 15, caractérisé en ce que le déplacement en translation vertical sur l'axe Z-Z est réalisé par un coulissement de la caméra vidéo (14) sur un rail (30) monté sensiblement vertical sur le châssis (28) de l'appareil.

17. Appareil selon l'une des revendications 8 à 16, caractérisé en ce que l'appareil précité (10) comprend au moins un tablette (32) comprenant des moyens de réception (34) de l'avant-bras (36) d'une personne concernée, ladite tablette (34) étant positionnée à une hauteur éventuellement réglable, pour permettre la mesure de la couleur de la peau d'une personne concernée sur son avant-bras (36) dans des conditions de mesure optimale et néanmoins confortable pour la personne concernée.

18. Appareil selon l'une des revendications 8 à 17, caractérisé en ce qu'il comprend également un boîtier (38), par exemple de forme sensiblement paraléllépipédique, comprenant sur sa face supérieure au moins un orifice (40) pour le passage de l'écran des moyens d'affichage (20) d'image, et un clavier de commande (24) pour la commande et/ou l'introduction de données dans une unité centrale (18) comprenant ou constituant les moyens de réception et de traitement d'image (18) comprenant des moyens de calcul et de détermination, par exemple un micro-ordinateur ou ordinateur, et des moyens d'impression (26) tels qu'une imprimante.

19. Gamme de couleurs de fond de teint, caractérisée en ce que les coordonnées en système de coordonnées Lab, des couleurs de fond de teint constituant la gamme sont comprises respectivement dans la zone A de la figure 10, dans le plan de coordonnées a (rouge), b (jaune) de la figure 10, comprise d'une part entre les deux demi-droites d'origine 0 et formant respectivement avec l'axe du rouge des angles d'environ 48° et environ 75°, et d'autre part les deux arcs de cercle de centre 0, de rayon correspondant respectivement aux valeurs de saturation 13 et 27, et compris entre lesdites deux demi-droites, et dans la zone B dans un plan de coordonnées L (luminance), C (saturation) de la figure 11, ce plan résultant de la superposition de l'ensemble des plans de coordonnées L, C résultant de l'ensemble des couleurs de fond de teint de référence de la gamme.

20. Gamme selon la revendication 19, caractérisée en ce qu'elle comprend au moins 20 teintes de fond de teint dont les coordonnées colorimétriques sont respectivement situées dans les zones A et B précitées des figures 10 et 11.

**Claims**

1. Method for determining the foundation makeup color that substantially reproduces the natural skin color of a person, characterized in that it comprises the following steps:

a) in a prior step, establishing a data base containing a palette of reference foundation colors substantially covering a representative sample of a population of given individuals, said data base containing at least the following data:

- the color of the skin on the inside of the arm or on the outside of the arm or both on the inside and on the outside of the arm, preferably in a middle region of the forearm in which the color of the veins is not particularly apparent, and which does not contain any skin marks,
- a reference foundation color associated with one or more of the skin colors in said data base,

b) measuring the color of the skin on the inside of the arm or on the outside of the arm or both on the inside and on the outside of the arm of a person concerned,

c) comparing the measured skin color of the person concerned with the skin colors in the data base to determine which color in the data base is identical or close thereto, and consequently to determine from said data base which foundation color is associated with said skin color in said data base.

2. Method according to claim 1, characterized in that in the prior step, the color of the hair of each individual constituting the basis is input into the data base so as to constitute as many groups of individuals as there are hair colors taken into account; in this case, when measuring the skin color of a person concerned, the color of that person's hair is input to determine, within said data base, firstly the group of individuals corresponding to said hair color, and secondly the identical or nearest skin color in the data base for the purpose of associating therewith a reference foundation as predetermined by said data base.

3. Method according to claim 1, characterized in that in the prior step, the color of the eyes of the individuals constituting the basis is input into said data base so as to constitute as many groups of individuals as there are eye colors taken into account; in this case, when measuring the skin color of a person concerned, the color of that person's eyes is input to determine, within said data base, firstly the group of individuals corresponding to said eye color, and secondly the identical or nearest skin color in the data base for the purpose of associating therewith a reference foundation as predetermined by said data base.

4. Method according to claim 1, characterized in that in the prior step, the color of the hair and the eyes of each individual which constitutes the basis is input into the data base so as to constitute as many groups of individuals as there are hair and eye colors taken into account; in this case, when measuring the color of the skin of a person concerned, the color of that person's hair and eyes is input to determine, within said data base, firstly the group of individuals corresponding to said hair and eye colors, and secondly the identical or nearest skin color in the data base for the purpose of associating therewith a reference foundation as predetermined by said data base.

5. Method according to one of the preceding claims, characterized in that the skin color is measured as follows:

- the skin of a person concerned is illuminated under determined lighting conditions;

- a color image of the skin is taken with a color image camera,

- the skin color is determined with the help of said color image.

6. Method according to claim 5, characterized in that the color of said skin is determined by determining the chromatic parameters of the skin color.

7. Method according to one of the preceding claims, characterized in that the reference foundation color palette of said data base is defined respectively by zone A of Figure 10 in the a (red), b (yellow) coordinate plane of Figure 10, comprised firstly between the two half-lines passing through origin O and repectively forming with the red axis angles of about 48° and about 75°, and secondly between the two circular arcs of center O, of radius respectively corresponding to saturation values of 13 and 27, and extending between said two half-lines, and in zone B in an L (luminance), C (saturation) coordinate plane of Figure 11, which plane is the result of superposing the set of L,C coordinate planes that results from all of the reference foundation colors in the data base of said palette, the color being defined in terms of color of foundation as applied, said applied foundation color being measured by applying the foundation to a region of skin on the inside of the forearm of a person having a skin color close to the foundation color to be applied.

8. Apparatus for determining a foundation makeup color that substantially reproduces the natural skin color of a person, comprising:

a) means (12) for measuring the color of the skin on the inside of the arm or on the outside of the arm or both on the inside and on the outside of the arm, preferably in a middle region of the forearm in which the color of the veins is not particularly apparent, and which does not contain any skin marks,

b) means (18) for computing and determining the skin color measured by the measuring means (12), said determining means (18) comprising a data base containing a palette of reference foundation colors substantially covering a representative sample of a population of given individuals, said data base containing at least the following data:

- the color of the skin on the inside of the arm or on the outside of the arm or both on the inside and on the outside of the arm, preferably in a middle region of the forearm in which the color of the veins is not particularly apparent, and which does not contain any marks,

- a reference foundation color associated with one or more of the skin colors in said data base,

c) said determining means (18) comprising means for comparing the measured skin color of the person concerned with the skin colors that appear in the data base, to determine which color in the data base is substantially identical thereto, and consequently to determine from said data base the foundation color associated with said skin color and, advantageously, comprising means (20) for displaying the determined foundation color.

9. Apparatus according to claim 8, characterized in that it further comprises in said data base the hair color of the individuals constituting the basis so as to constitute as many groups of individuals as there are hair colors taken into account, together with means for inputting the hair color of the person concerned whose skin color is being measured, so as to determine within said data base firstly the group of individuals corresponding to said hair color and secondly the identical or nearest skin color that appears in said data base, so as to associate therewith a reference foundation that is predetermined by said data base and which is subsequently displayed by the display means.

10. Apparatus according to claim 8 or 9, characterized in that said data base contains the eye color of the individuals constituting the basis so as to constitute as many groups of individuals as there are eye colors taken into account, together with means for inputting the eye color of the person concerned whose skin color is being measured, so as to determine within said data base firstly the group of individuals corresponding to said eye color and secondly the identical or nearest skin color that appears in said data base so as to associate therewith a reference foundation that is predetermined by said data base.

11. Apparatus according to one of claims 8 to 10, characterized in that said data base contains the eye color and the hair color of each individual constituting the data base so as to constitute as many groups of individuals as there are eye and hair colors taken into account; and means for inputting the eye and hair colors of the person concerned whose skin color is being measured, so as to determine within said data base firstly the group of individuals corresponding to said eye and hair colors and secondly the identical or nearest skin color that appears in said data base so as to associate therewith a reference foundation that is predetermined by said data base and which is subsequently displayed by the display means.

12. Apparatus according to one of claims 8 to 11, characterized in that said means (12) for measuring skin color comprise:

- a lighting device (16) for illuminating the skin under determined lighting conditions,
- means (14) for taking a color image of the skin, preferably comprising a color video camera advantageously having very good color performance; and
- means (18) for receiving and processing the image to determine said skin color.

13. Apparatus according to one of claims 8 to 12, characterized in that said image reception and processing means (18) determine the chromatic parameters of the skin color; in this case, said data base also contains the chromatic parameters of the skin colors of the individuals constituting the basis in terms of R (red), G (green), B (blue), and Y (luminance) coordinates.

14. Apparatus according to claim 12 or 13, characterized in that said image reception and processing means (18) comprise computer means, e.g. computers or microcomputers, and said display means (20) comprise a screen and/or a printer (26).

15. Apparatus according to one of claims 8 to 14, characterized in that said measuring means (12) comprise a video camera (14) displaceably mounted on the structure (28) of the apparatus (10), at least in translation along a vertical direction Z-Z and advantageously also pivotally mounted about an axis of rotation Y-Y that is substantially orthogonal to the vertical translation axis Z-Z.

16. Apparatus according to claim 15, characterized in that the vertical translation displacement along the axis Z-Z is achieved by sliding the video camera (14) along a rail (30) mounted substantially vertically on the structure (28) of the apparatus.

17. Apparatus according to one of claims 8 to 16, characterized in that said apparatus (10) comprises at least one table top (32) having means (34) for receiving the forearm (36) of a person concerned, said table top (32) being positioned at an optionally adjustable height to enable the skin color on the forearm (36) of a person concerned to be measured under optimum measurement conditions that are nevertheless comfortable for the person concerned.

18. Apparatus according to one of claims 8 to 17, characterized in that it further comprises a housing (38), e.g. in the form of a substantially rectangular booth, comprising at least one orifice (40) in its top face for passing the screen of the image display means (20), and a control keyboard (24) for controlling and/or inputting data to a central unit (18) comprising or constituting the image reception and processing means (18) that comprise computing and determining means, e.g. a computer or a microcomputer, and printer means (26) such as a printer.

19. A palette of foundation colors, characterized in that the coordinates in the Lab coordinate system of the foundation colors constituting the palette lie respectively in zone A of Figure 10, in the a (red), b (yellow) coordinate plane of Figure 10 comprised firstly between the two half-lines passing through origin O and respectively forming with the red axis angles of about 48° and about 75°, and respectively corresponding to saturation values of 13 and 27, and extending between said two half-lines, and in zone B in an L (luminance), C (saturation) coordinate plane of Figure 11, which plane is the result of superposing the set of L,C coordinate planes that results from all of the reference foundation colors in the data base of said palette, the color being defined in terms of color of foundation of the palette.

20. A palette according to claim 19, characterized in that it comprises at least 20 foundation tints whose colorimetric coordinates are situated respectively in the above-mentioned zones A and B of Figures 10 and 11.

**Patentansprüche**

1. Verfahren zur Bestimmung einer Make-up-Farbe, welche die natürliche Hautfarbe einer Person im wesentlichen wiederherstellt, dadurch gekennzeichnet, daß es die folgenden Schritte aufweist:

   a) in einem vorhergehenden Schritt wird eine Datenbank erstellt, welche eine Make-up-Referenzfarbskala enthält, die im wesentlichen eine repräsentative Gruppe einer gegebenen Population von Einzelpersonen abdeckt, welche Datenbank zumindest die folgenden Daten enthält:

   - die Hautfarbe an der Arminnenseite oder an der Armaußenseite oder sowohl an der Arminnenseite als auch an der Armaußenseite, vorzugsweise in einer mittleren Zone des Unterarms, in der die Farbe der Venen im wesentlichen nicht sichtbar ist, und die keine Hautflecken enthält,
   - eine Make-up-Referenzfarbe, die einer oder mehreren Hautfarben in der Datenbank zugeordnet ist,

   b) die Hautfarbe an der Arminnenseite oder an der Armaußenseite oder sowohl an der Arminnenseite als auch an der Armaußenseite einer betreffenden Person wird gemessen,

   c) die gemessene Hautfarbe der betreffenden Person wird mit den in der Datenbank vorliegenden Hautfarben verglichen, um zu bestimmen, welche die identische oder benachbarte Farbe in der Datenbank ist, und um demgemäß in der Datenbank die Make-up-Farbe zu bestimmen, die dieser Hautfarbe in der Datenbank zugeordnet ist.

2. Verfahren nach Anspruch 1, dadurch gekennzeichnet, daß im vorhergehenden Schritt in die Datenbank die Haarfarbe der die Datenbank bildenden Einzelpersonen eingegeben wird, um genausoviele Gruppen von Einzelpersonen wie berücksichtigte Haarfarben zu bilden; in diesem Fall bei der Messung der Hautfarbe einer betreffenden Person ihre Haarfarbe eingegeben wird, um in der Datenbank zuerst die Gruppe von Einzelpersonen, die ihrer Haarfarbe entspricht, und dann die in der Datenbank vorliegende identische oder nächstliegende Hautfarbe zu bestimmen, wobei dieser eine durch die Datenbank vorherbestimmte Make-up-Referenz zugeordnet wird.

3. Verfahren nach Anspruch 1, dadurch gekennzeichnet, daß im vorhergehenden Schritt in die Datenbank die Augenfarbe der die Datenbank bildenden Einzelpersonen eingegeben wird, um genausoviele Gruppen von Einzelpersonen wie berücksichtigte Augenfarben zu bilden; in diesem Fall bei der Messung der Hautfarbe einer betreffenden Person ihre Augenfarbe eingegeben wird, um in der Datenbank zuerst die Gruppe von Einzelpersonen, die ihrer Augenfarbe entspricht, und dann die in der Datenbank vorliegende identische oder nächstliegende Hautfarbe zu bestimmen, wobei dieser eine durch die Datenbank vorherbestimmte Make-up-Referenz zugeordnet wird.

4. Verfahren nach Anspruch 1, dadurch gekennzeichnet, daß im vorhergehenden Schritt in die Datenbank die Augen- und die Haarfarbe der die Datenbank bildenden Einzelpersonen eingegeben werden, um genausoviele Gruppen von Einzelpersonen wie berücksichtigte Augen- und Haarfarben zu bilden; in diesem Fall bei der Messung der Hautfarbe einer betreffenden Person ihre Augen- und Haarfarbe eingegeben werden, um in der Datenbank zuerst die Gruppe von Einzelpersonen, die ihrer Augen- und Haarfarbe entspricht, und dann die in der Datenbank vorliegende identische oder nächstliegende Hautfarbe zu bestimmen, wobei dieser eine durch die Datenbank vorherbestimmte Make-up-Referenz zugeordnet wird.

5. Verfahren nach einem der vorhergehenden Ansprüche, dadurch gekennzeichnet, daß die Hautfarbe auf folgende Weise gemessen wird:

- die Haut einer betreffenden Person wird unter bestimmten Lichtbedingungen belichtet,
- ein Farbbild der Haut wird mit einer Farbbildaufnahmevorrichtung aufgenommen,
- die Hautfarbe wird mit Hilfe dieses Farbbildes bestimmt.

6. Verfahren nach Anspruch 5, dadurch gekennzeichnet, daß zur Bestimmung der Hautfarbe die chromatischen Parameter der Hautfarbe bestimmt werden.

7. Verfahren nach einem der vorhergehenden Ansprüche, dadurch gekennzeichnet, daß die Make-up-Referenzfarbskala der Datenbank definiert wird durch die Zone A in Fig.10, in der Koordinatenebene a (rot), b (gelb) in Fig.10, die einerseits zwischen den beiden Halbgeraden mit dem Ursprung 0, wobei diese mit der Rot-Achse Winkel von ungefähr 48° bzw. ungefähr 75° bilden, und andererseits zwischen den beiden Kreisbögen mit dem Mittelpunkt 0 angeordnet ist, wobei die Radien den Sättigungswerten 13 bzw. 27 entsprechen, und diese Kreisbögen zwischen den beiden Halbgeraden liegen, bzw. durch die Zone B in einer Koordinatenebene L (Leuchtdichte), C (Sättigung) in Fig.11, wobei diese Ebene aus der Überlagerung der Gesamtheit der Koordinatenebenen L, C resultiert, die sich aus der Gesamtheit der Make-up-Referenzfarben der Datenbank-Skala ergeben, wobei die Farbe als Farbe des aufgebrachten Make-ups definiert wird, und wobei diese Farbe des aufgebrachten Make-ups durch das Aufbringen auf eine Hautzone an der Unterarminnenseite einer Person mit einer Hautfarbe, die der aufzubringenden Make-up-Farbe naheliegt, gemessen wird.

8. Vorrichtung zur Bestimmung einer Make-up-Farbe, welche im wesentlichen die natürliche Hautfarbe einer Person wiederherstellt, dadurch gekennzeichnet, daß sie aufweist:

   a) eine Einrichtung (12) zur Messung der Hautfarbe an der Arminnenseite oder Armaußenseite oder sowohl an der Arminnenseite als auch an der Armaußenseite, vorzugsweise in einer mittleren Zone des Unterarms, in der die Farbe der Venen im wesentlichen nicht sichtbar ist, und die keine Hautflecken enthält,
   b) eine Einrichtung (18) zur Berechnung und zur Bestimmung der durch die Meßeinrichtung (12) gemessenen Hautfarbe, welche Bestimmungseinrichtung (18) eine Datenbank aufweist, die eine Make-up-Referenzfarbskala enthält, die im wesentlichen eine repräsentative Gruppe einer gegebenen Population von Einzelpersonen abdeckt, welche Datenbank zumindest die folgenden Daten enthält:

- die Hautfarbe an der Arminnenseite oder an der Armaußenseite oder sowohl an der Arminnenseite als auch an der Armaußenseite, vorzugsweise in einer mittleren Zone des Unterarms, in der die Farbe der Venen im wesentlichen nicht sichtbar ist, und die keine Hautflecken enthält,
- eine Make-up-Referenzfarbe, die einer oder mehreren Hautfarben in der Datenbank zugeordnet ist,

   c) wobei die Bestimmungseinrichtung (18) eine Einrichtung zum Vergleich der gemessenen Hautfarbe der betreffenden Person mit den in der Datenbank vorliegenden Hautfarben, um zu bestimmen, welche die identische oder benachbarte Farbe in der Datenbank ist, und um demgemäß in der Datenbank die Make-up-Farbe zu bestimmen, die dieser Hautfarbe zugeordnet ist, und vorteilhaft eine Einrichtung (20) zur Anzeige der ermittelten Make-up-Farbe aufweist.

9. Vorrichtung nach Anspruch 8, dadurch gekennzeichnet, daß sie in der Datenbank auch die Haarfarbe der die Datenbank bildenden Einzelpersonen, um genausoviele Gruppen von Einzelpersonen wie berücksichtigte Haarfarben zu bilden, sowie eine Einrichtung zur Eingabe der Haarfarbe einer betreffenden Person, deren Hautfarbe gemessen wird, aufweist, um in der Datenbank zuerst die Gruppe von Einzelpersonen, die ihrer Haarfarbe entspricht, und dann die in der Datenbank vorliegende identische oder nächstliegende Hautfarbe zu bestimmen, wobei dieser eine durch die Datenbank vorherbestimmte Make-up-Referenz zugeordnet wird, die anschließend durch die Anzeigeeinrichtung angezeigt wird.

10. Vorrichtung nach Anspruch 8 oder 9, dadurch gekennzeichnet, daß die Datenbank die Augenfarbe der die Datenbank bildenden Einzelpersonen, um genausoviele Gruppen von Einzelpersonen wie berücksichtigte Augenfarben zu bilden, sowie eine Einrichtung zur Eingabe der Augenfarbe einer betreffenden Person, deren Hautfarbe gemessen wird, aufweist, um in der Datenbank zuerst die Gruppe von Einzelpersonen, die ihrer Augenfarbe entspricht, und dann die in der Datenbank vorliegende identische oder nächstliegende Hautfarbe zu bestimmen, wobei dieser eine durch die Datenbank vorherbestimmte Make-up-Referenz zugeordnet wird.

11. Vorrichtung nach einem der Ansprüche 8 bis 10, dadurch gekennzeichnet, daß die Datenbank die Augen- und die Haarfarbe der die Datenbank bildenden Einzelpersonen, um genausoviele Gruppen von Einzelpersonen wie berücksichtigte Augen- und Haarfarben zu bilden, und eine Einrichtung zur Eingabe der Augen- und der Haarfarbe einer betreffenden Person, deren Hautfarbe gemessen wird, aufweist, um in der Datenbank zuerst die Gruppe von Einzelpersonen, die ihrer Augen- und Haarfarbe entspricht, und dann die in der Datenbank vorliegende identische oder nächstliegende Hautfarbe zu bestimmen, wobei dieser eine durch die Datenbank vorherbestimmte Make-up-Referenz zugeordnet wird, die durch die Anzeigeeinrichtung angezeigt wird.

12. Vorrichtung nach einem der Ansprüche 8 bis 11, dadurch gekennzeichnet, daß die Einrichtung (12) zur Messung der Hautfarbe aufweist:

- eine Vorrichtung (16) zur Belichtung der Haut unter festgelegten Belichtungsbedingungen,
- eine Einrichtung (14) zur Aufnahme von Farbbildern der Haut, die vorzugsweise eine Videofarbkamera mit vorteilhaft sehr guter chromatischer Leistung aufweist,
- eine Einrichtung (18) zum Empfang und zur Verarbeitung von Bildern, um die Hautfarbe zu bestimmen.

13. Vorrichtung nach einem der Ansprüche 8 bis 12, dadurch gekennzeichnet, daß die Empfangs- und Verarbeitungseinrichtung (18) die chromatischen Parameter der Hautfarbe bestimmt; in diesem Fall die Datenbank auch die chromatischen Parameter der Hautfarben der die Datenbank bildenden Einzelpersonen, vorzugsweise als Koordinaten R (rot), V (grün), B (blau) und Y (Helligkeit), enthält.

14. Vorrichtung nach Anspruch 12 oder 13, dadurch gekennzeichnet, daß die Empfangs- und Verarbeitungseinrichtung (18) eine Berechnungseinrichtung, beispielsweise Mikrorechner oder Rechner, aufweist, und die Anzeigeeinrichtung (20) einen Bildschirm und/oder einen Drucker (26) aufweist.

15. Vorrichtung nach einem der Ansprüche 8 bis 14, dadurch gekennzeichnet, daß die Meßeinrichtung (12) eine Videokamera (14) aufweist, die verstellbar, zumindest verschiebbar gemäß einer vertikalen Richtung Z-Z, und vorteilhaft auch schwenkbar, gemäß einer Rotationsachse Y-Y im wesentlichen orthogonal zur vertikalen Translationsachse Z-Z, auf einem Gestell (28) der Vorrichtung (10) befestigt ist.

16. Vorrichtung nach Anspruch 15, dadurch gekennzeichnet, daß die vertikale Verschiebung auf der Achse Z-Z durch ein Gleiten der Videokamera (14) auf einer Schiene (30) realisiert ist, die im wesentlichen vertikal am Gestell (28) der Vorrichtung befestigt ist.

17. Vorrichtung nach einem der Ansprüche 8 bis 16, dadurch gekennzeichnet, daß die Vorrichtung (10) zumindest einen Tisch (32) mit einer Aufnahme (34) für den Unterarm (36) einer betreffenden Person aufweist, welcher Tisch (34) in einer gegebenenfalls einstellbaren Höhe positioniert ist, um die Messung der Hautfarbe einer betreffenden Person an ihrem Unterarm (36) unter optimalen und dennoch für die betreffende Person bequemen Meßbedingungen zu ermöglichen.

18. Vorrichtung nach einem der Ansprüche 8 bis 17, dadurch gekennzeichnet, daß sie auch ein Gehäuse (38), beispielsweise im wesentlichen mit der Form eines Parallelepipeds, aufweist, das an seiner Oberseite zumindest eine Öffnung (40) für das Anbringen des Bildschirms der Bildanzeigeeinrichtung (20) und eine Eingabetastatur (24) zur Eingabe von Befehlen und/oder Daten in eine Zentraleinheit (18) hat, welche die Bildempfangs- und -verarbeitungseinrichtung (18) aufweist oder bildet, die die Berechnungs- und Bestimmungseinrichtung, beispielsweise einen Mikrorechner oder Rechner, und eine Druckeinrichtung (26), wie einen Drucker, aufweist.

19. Make-up-Farbskala, dadurch gekennzeichnet, daß die Koordinaten, im Lab-Koordinatensystem, der die Skala bildenden Make-up-Farben in der Zone A in Fig.10, in der Koordinatenebene a (rot), b (gelb) in Figur 10, die einerseits zwischen den beiden Halbgeraden mit dem Ursprung 0, wobei diese mit der Rot-Achse Winkel von ungefähr 48° bzw. ungefähr 75° bilden, und andererseits zwischen den beiden Kreisbögen mit dem Mittelpunkt 0 angeordnet ist, wobei die Radien den Sättigungswerten 13 bzw. 27 entsprechen, und diese Kreisbögen zwischen den beiden Halbgeraden liegen, bzw. in der Zone B in einer Koordinatenebene L (Leuchtdichte), C (Sättigung) in Fig.11 enthalten sind, wobei diese Ebene aus der Überlagerung der Gesamtheit der Koordinatenebenen L, C resultiert, die sich aus der Gesamtheit der Make-up-Referenzfarben der Skala ergeben.

20. Skala gemäß Anspruch 19, dadurch gekennzeichnet, daß sie zumindest 20 Make-up-Schattierungen aufweist, deren kolorimetrische Koordinaten in den Zonen A bzw. B in den Figuren 10 und 11 angeordnet sind.

# FIG.1

FOND DE TEINT M: JAUNE vs ROUGE
MOYENNE DES ETALEMENTS DES SUJETS

FIG.2

EP 0 638 261 B1

FOND DE TEINT M: JAUNE vs ROUGE
MOYENNE +/- Sr DES ETALEMENTS DES SUJETS

FIG.3

EP 0 638 261 B1

FIG.4

FOND DE TEINT M: LUMINANCE vs SATURATION
MOYENNE DES ETALEMENTS SUR SUJETS

EP 0 638 261 B1

FIG.5  FOND DE TEINT M: LUMINANCE vs SATURATION
MOYENNE +/- Sr DES ETALEMENTS SUR SUJETS

JAUNE vs ROUGE SUR BRAS NU
MOYENNE DES SUJETS AYANT MEME FDT

FIG.6

EP 0 638 261 B1

ROUGE vs JAUNE SUR BRAS NU
MOYENNE +/- Sr

FIG.7

EP 0 638 261 B1

FIG.8    LUMINANCE vs SATURATION SUR BRAS NU
MOYENNE DES SUJETS AYANT MEME FDT

EP 0 638 261 B1

FIG.9

LUMINANCE vs SATURATION SUR BRAS NU
MOYENNE +/- Sr

LUMINANCE

SATURATION

EP 0 638 261 B1

FOND DE TEINT M et S : JAUNE vs ROUGE
MOYENNE DES ETALEMENTS SUR SUJETS

FIG.10

FIG.11